# FASCICULE DE BREVET EUROPEEN

(11) **EP 3 283 354 B1**
(45) Date de publication et mention de la délivrance du brevet: **03.06.2020**
(21) Numéro de dépôt: 16717190.9
(22) Date de dépôt: 05.04.2016
(51) Int. Cl.: B62D 25/08, B62D 29/00

(54) **STRUCTURE DE FACE AVANT TECHNIQUE DE VÉHICULE AUTOMOBILE EN MATIÈRE PLASTIQUE**
TECHNISCHE VORDERFLÄCHENSTRUKTUR EINES KRAFTFAHRZEUGS AUS KUNSTSTOFF
TECHNICAL FRONT FACE STRUCTURE OF A MOTOR VEHICLE, MADE OF A PLASTIC MATERIAL

(30) Priorité: 14.04.2015 FR 1553259
(43) Date de publication de la demande: 21.02.2018
(73) Titulaire: Renault S.A.S., 92100 Boulogne-Billancourt (FR)
(72) Inventeur: HOUARI-ZANIROLI, Pascal, 78150 Le Chesnay (FR); OUDDANE, Abdelhak, 78280 Guyancourt (FR); BERTHEVAS, Fabrice, 91940 Gometz Le Chatel (FR)
(86) Numéro de dépôt international: PCT/FR2016/050769
(87) Numéro de publication internationale: WO 2016/166441

(56) Documents cités:
- EP-A- 2 284 066
- EP-B1- 1 866 108
- WO-A1-2007/140113
- DE-A1- 19 946 349
- DE-A1-102006 021 457
- FR-A1- 2 783 795
- US-A1- 2007 176 440

## Description

L'invention concerne une structure de face avant technique de véhicule automobile réalisée en matière plastique.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes et constitue généralement un châssis se présentant sous la forme d'une structure sensiblement rectangulaire, conçue pour être fixée à la structure de caisse du véhicule. La FAT intègre une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

De ce fait, la face avant technique doit comporter des renforts locaux destinés à garantir sa bonne tenue mécanique dans ses régions fortement sollicitées.

Les renforts traditionnellement utilisés sont des inserts métalliques qui peuvent être surmoulés lors de la réalisation de la face avant technique en matière plastique. Pour assurer la rigidité, il s'avère nécessaire d'assembler les inserts de renfort métalliques entre eux. Cette fixation peut être réalisée avant de surmouler les inserts ou après, par tout moyen approprié. Toutefois, ce type d'agencement destiné à assurer la rigidité de la face avant technique en matière plastique, implique de faire appel à des technologies complexes d'assemblage et, en particulier, à l'injection hybride métal plastique (injection d'une matière thermoplastique avec insert métallique dans le moule), ce qui requiert des compétences spécifiques et augmente les coûts d'assemblage.

Un but de l'invention est d'assurer ou d'améliorer la rigidité et la tenue mécanique d'une structure de face avant technique en matière plastique de manière simple et peu coûteuse.

A cet effet, l'invention concerne une structure de face avant technique de véhicule automobile comprenant un châssis monobloc en matière plastique de forme sensiblement rectangulaire comprenant des points de fixation destinés à être fixés à une structure de caisse dudit véhicule, ledit châssis présentant une face avant, une face arrière et une bordure supérieure, ainsi qu'un élément de renfort métallique du châssis, la bordure supérieure présentant un logement s'étendant dans une direction longitudinale de la bordure supérieure, au sein duquel est insérée une traverse métallique formant l'élément de renfort métallique, la traverse métallique étant maintenue en position dans le logement d'une part, par des premiers éléments de fixation agencés à chaque extrémité de la traverse métallique et aptes à relier mécaniquement entre eux la traverse métallique, le châssis et la structure de caisse lorsque le châssis est rapporté sur la structure de caisse et, d'autre part, par des seconds éléments de fixations agencés le long d'une portion de la traverse métallique s'étendant entre chacune de ses extrémités et aptes à relier mécaniquement la traverse métallique au châssis. Ces caractéristiques techniques sont connues du document DE 10 2006 021457 qui divulgue ainsi le préambule de la première revendication.

Par ailleurs, l'invention prévoit également que;
- le logement présente à chacune de ses extrémités un orifice de fixation pour le passage des premiers éléments de fixation s'étendant selon un axe sensiblement parallèle au plan des faces avant et arrière ;
- les orifices de fixation agencés aux extrémités du logement constituent des points de fixation verticale du châssis sur la structure de caisse, le châssis étant apte à être pris en sandwich entre la traverse métallique et la structure de caisse aux dits points de fixation verticale sous l'action des premiers éléments de fixation.

Selon d'autres caractéristiques avantageuses de la structure de face avant technique conforme à l'invention, prises isolément ou en combinaison:
- le logement comprend entre ses extrémités, une pluralité d'orifices de fixation pour le passage des seconds éléments de fixation s'étendant selon un axe sensiblement perpendiculaire au plan des faces avant et arrière;
- les premiers éléments de fixation comportent une vis pour chaque extrémité de la traverse métallique ;
- les seconds éléments de fixation comportent quatre vis réparties sur la longueur de la traverse métallique entre ses extrémités ;
- le logement est réalisé d'une pièce avec la bordure supérieure.
- la traverse métallique est constituée de deux tôles en acier superposées et soudées entre elle, conformées pour présenter une forme complémentaire à celle du logement à l'intérieur duquel la traverse métallique est insérée.

L'invention concerne également un véhicule équipé d'une structure de face avant technique selon l'invention.

D'autres caractéristiques et avantages de l'invention ressortiront clairement de la description qui en est faite ci-après, à titre indicatif et nullement limitatif, en référence aux dessins annexés, dans lesquels:
- la figure 1 représente une vue en perspective par l'avant et par en haut d'une structure de face avant technique selon un mode de réalisation de l'invention ;
- la figure 2 représente une vue en perspective par l'arrière de la structure représentée à la figure 1 ;
- la figure 3 représente une en perspective par l'arrière et par en haut de la structure représentée à la figure 1, sans l'élément de renfort métallique ;
- la figure 4 est une vue en perspective d'une structure de caisse avant du véhicule à laquelle est destinée à être fixée la structure de face avant technique selon l'invention ;
- la figure 5 est une vue éclatée de la structure représentée en figure 2 ;
- les figures 6a et 6b sont des vues de détail en coupe transversale des zones d'assemblage de la traverse métallique au logement supérieur de la face avant technique en plastique.

Sur les figures, les mêmes éléments sont désignés par les mêmes références.

Dans la présente description, les termes avant, arrière, supérieur, inférieur, font référence aux directions avant et arrière du véhicule, lorsque l'assemblage est monté sur un véhicule. Les axes X, Y, Z, correspondent respectivement à l'axe longitudinal (d'avant en arrière), transversal (orienté vers la droite) et vertical (orienté vers le haut) du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

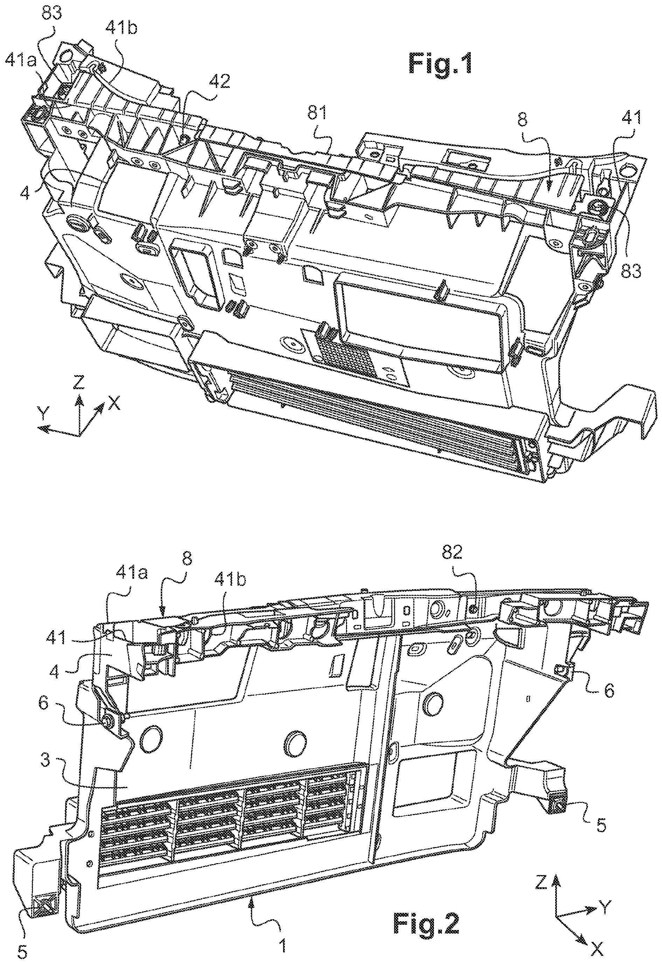

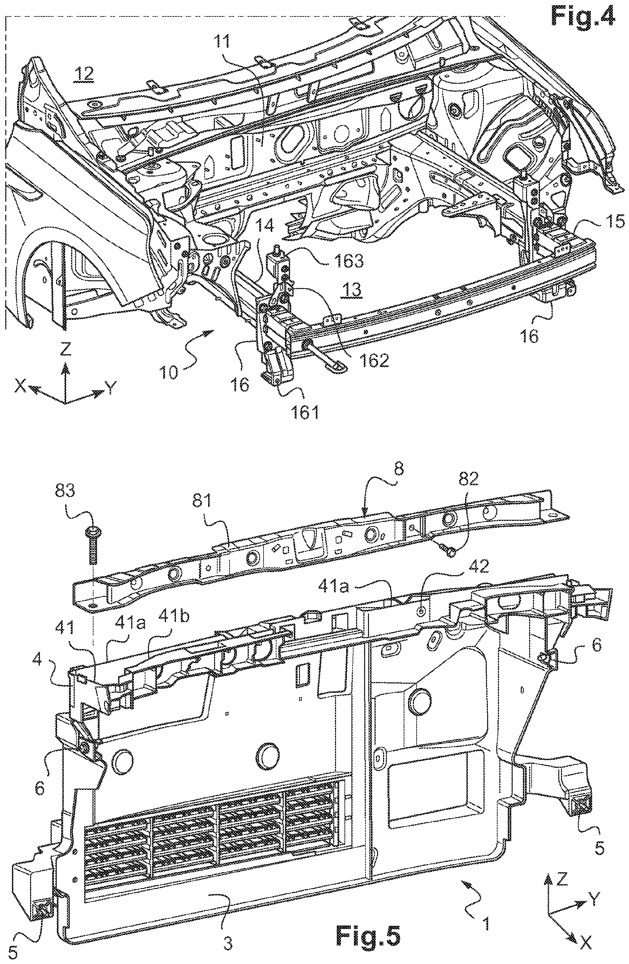

Les figures 1 à 3 représentent, selon différentes orientations, une structure de face avant technique 1 d'un véhicule automobile. Cette structure se présente ici sous la forme d'un châssis 1 monobloc, réalisé en matière plastique, de forme générale sensiblement rectangulaire, comprenant une face avant 2, une face arrière 3 et une bordure supérieure 4, s'étendant en saillie vers l'arrière sensiblement perpendiculairement aux faces avant et arrière de la structure de face avant technique. Le châssis 1 comprend par ailleurs des points de fixation destinés à être fixés à la caisse du véhicule et notamment, des points de fixation 5, 6, 7 agencés le long de chacun de ses bords latéraux pour la fixation de la structure de face avant technique à la caisse du véhicule respectivement selon les axes longitudinal, transversal et vertical. La figure 4 illustre une partie de structure de caisse 10 de véhicule automobile où la structure de face avant technique est destinée à venir s'implanter. Cette structure de caisse comprend principalement un tablier 11 s'étendant transversalement suivant l'axe Y et séparant une cellule d'habitacle 12 d'un compartiment moteur 13, le tablier comprenant une paroi verticale en avant de laquelle sont disposés des longerons longitudinaux 14, 15, qui s'étendent de part et d'autre du compartiment moteur 13. Sensiblement en avant de ces longerons 14, 15 sont disposés des organes de fixation 16 sur lesquels sont agencées, suivant une direction verticale, des équerres de fixation 161, 162, 163 pour la fixation respective des points de fixation 5, 6, 7 de la structure de face avant technique sur la structure de caisse 10, suivant les axes longitudinal, transversal et vertical. Plus précisément, une partie inférieure du châssis 1 de la structure de face avant technique est prévue pour être reliée à l'organe de fixation 16 des longerons longitudinaux par les points de fixation 5, agencés en partie inférieure du châssis et autorisant une fixation suivant l'axe longitudinal à l'équerre de fixation 161. Par ailleurs, une partie supérieure du châssis 1 de la structure de face avant technique est prévue pour être reliée à l'organe de fixation 16 des longerons longitudinaux par les points de fixation 7, agencés en partie supérieure du châssis et autorisant une fixation suivant l'axe vertical à l'équerre de fixation 163. Enfin, une partie intermédiaire du châssis de la structure de face avant technique 1, disposée entre les parties inférieure et supérieure du châssis, est prévue pour être reliée à l'organe de fixation 16 des longerons longitudinaux par les points de fixation 6, agencés en partie intermédiaire du châssis et autorisant une fixation suivant l'axe transversal à l'équerre de fixation 162.

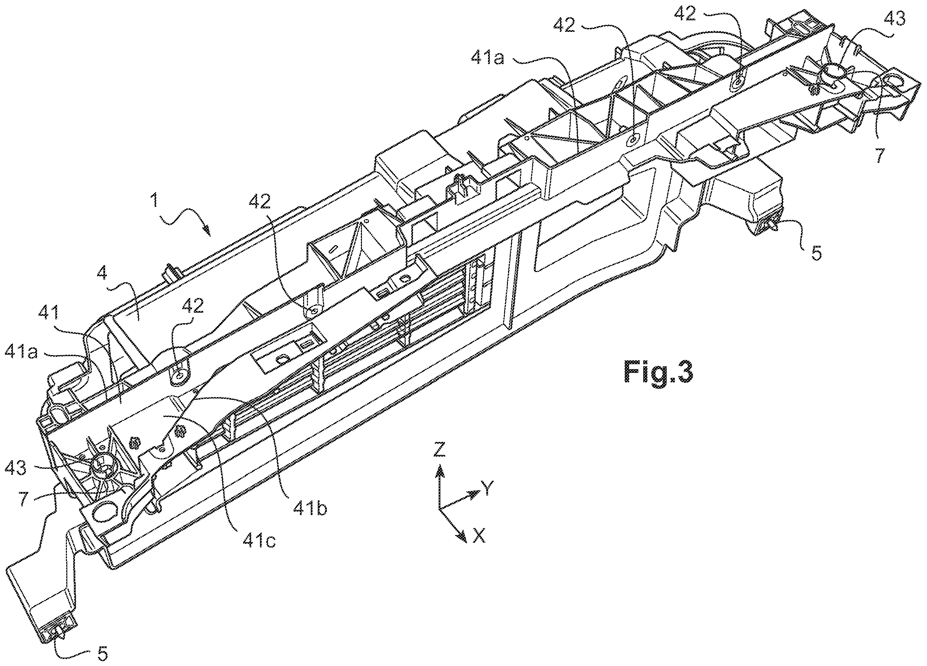

Selon l'invention et comme on le voit mieux sur la vue de la figure 3, la bordure supérieure 4 du châssis 1 de la structure de face avant technique comporte un logement 41 s'étendant sur toute la longueur de la bordure supérieure, soit suivant la direction de l'axe Y sur les figures. Ainsi, le logement 41 est délimité par deux parois longitudinales 41a, 41b, respectivement une paroi avant et une paroi arrière, s'étendant sensiblement perpendiculairement depuis une paroi de fond 41c sensiblement horizontale de la bordure supérieure 4. Le logement 41 présente ainsi une section transversale ouverte concave et est orienté de sorte que la concavité qu'il définit est dirigée dans la direction verticale, suivant l'axe Z. Le logement 41 présente en outre des orifices taraudés 42 ménagés dans la paroi avant 41a du logement 41 et s'étendant sensiblement perpendiculairement au plan des faces avant et arrière, soit sensiblement perpendiculairement à la paroi avant 41a du logement 41 (autrement dit, dans la direction de l'axe X sur les figures), pour le passage d'éléments de fixation 82, qui seront décrit plus loin en détail. Selon l'exemple de réalisation représenté, on prévoit par exemple quatre orifices taraudés 42 répartis entre les extrémités de la paroi 41a du logement 41.

Le logement 41 comprend en outre au niveau de chacune de ses extrémités, un orifice de fixation 43 ménagé dans la paroi de fond 41c du logement 41 et s'étendant sensiblement parallèlement au plan des faces avant et arrière, soit perpendiculairement à la paroi de fond 41c (autrement dit, dans la direction de l'axe Z sur les figures), pour le passage d'éléments de fixation 83, qui seront décrit plus loin en détail. Ces orifices 43 ménagés à chaque extrémité de la paroi de fond du logement 41 sont avantageusement confondus avec les points de fixation verticale 7, prévus en partie supérieure du châssis 1 et autorisant une fixation verticale du châssis 1 de la structure de face avant technique à l'équerre de fixation 163 agencés sur les longerons longitudinaux du véhicule.

Comme on le voit mieux sur la figure 5, la structure de face avant technique en matière plastique selon l'invention intègre un élément de renfort 8 constitué d'une traverse métallique 81 destinée à être insérée à l'intérieur du logement 41, de sorte à procurer de la rigidité à la structure en matière plastique. La traverse métallique 81 peut par exemple être en acier, notamment en acier inoxydable, ou tout autre matériau métallique présentant la rigidité recherchée. Pour procurer la rigidité recherchée, la traverse métallique 81 est par exemple constituée de deux tôles d'acier superposées et soudées entre elles, l'ensemble étant conformé pour présenter une forme complémentaire à celle du logement 41 à l'intérieur duquel la traverse doit être insérée. Suivant le mode de réalisation représenté, la traverse métallique 81 est destinée à être insérées dans le logement 41 suite à un mouvement parallèle aux faces avant 2 et arrière 3 de la structure de face avant technique 1, soit ici suivant un mouvement vertical.

Selon l'invention, cette traverse métallique 81 est rapportée vissée dans le logement 41 défini en bordure supérieure 4 du châssis 1 de la structure de face avant technique. Ceci permet avantageusement d'éviter d'avoir à recourir à la technique coûteuse l'injection hybride métal plastique pour la fabrication. Toutefois, pour éviter de pénaliser le temps d'assemblage de la traverse métallique et du châssis de la structure de face avant technique, le nombre de fixation sera limité au nombre minimum propre à permettre d'assurer un bon couplage mécanique de ces deux composants et de respecter les exigences du cahier des charges en termes de tenue mécanique de la structure de face avant technique.

Selon le mode de réalisation représenté, la traverse métallique 81 est maintenue en position dans le logement 41 d'une part, par des vis 83 agencées à chacune des extrémités de la traverse métallique 81, préférentiellement une vis 83 par extrémité et, d'autre part, par des vis 82 agencées le long d'une portion de la traverse métallique 81 s'étendant entre chacune de ses extrémités, préférentiellement quatre vis 82 réparties sur la longueur de la traverse.

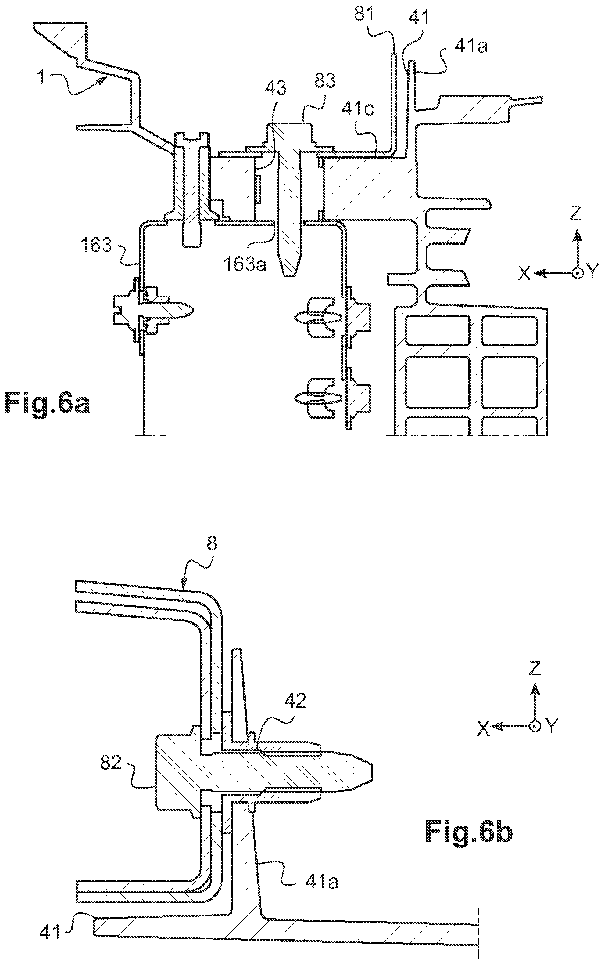

Comme on le voit mieux sur la figure 6a, les vis 83 sont insérées au travers des orifices 43 du logement 41 suivant la direction verticale. Au surplus, chaque vis 83, qui s'étend verticalement (vissage vertical suivant l'axe Z) est prévue pour permettre de relier mécaniquement entre eux d'une part, la traverse métallique 81 agencée dans le logement 41, d'autre part le châssis 1 de la structure de face avant et, d'autre part encore, la caisse du véhicule lorsque le châssis 1 est rapporté sur la caisse au niveau de ses points de fixation 7 coopérant avec l'équerre de fixation supérieure 163 disposée sur les longerons longitudinaux de la caisse. Ainsi, l'équerre de fixation 163 présente un orifice 163a correspondant à l'orifice 43 de la paroi de fond 41c du logement 41 lorsque le châssis 1 est rapporté sur la caisse, permettant le passage de la vis de fixation 83 reliant mécaniquement la traverse métallique 81, le châssis 1 et la caisse au niveau de l'équerre de fixation 163. Suivant cet agencement, lorsque la traverse métallique 81 est rapportée vissée dans le logement 41 par l'intermédiaire des vis 83 agencées à chacune de ses extrémités, le châssis 1 de la structure de face avant technique est pris en sandwich, en particulier la paroi de fond 41c du logement 41, entre la traverse métallique 81 et la caisse du véhicule, au niveau de l'équerre de fixation supérieure 163.

Comme illustré en figure 6b, les vis 82 sont insérées au travers des orifices de fixation 42 de la paroi longitudinale 41a du logement 41 suivant la direction horizontale. Au surplus, chaque vis 82, qui s'étend horizontalement (vissage horizontal suivant l'axe X) est prévue pour permettre de relier mécaniquement la traverse métallique 81 insérée dans le logement 41 et le châssis 1 de la structure de face avant technique, au niveau de la paroi 41a du logement 41 défini au niveau de la bordure supérieure du châssis 1.

L'insertion de la traverse métallique 81, rapportée vissée dans le logement 41 prévu en bordure supérieure du châssis 1 de la structure de face avant technique en matière plastique, permet ainsi de renforcer de manière simple la structure de face avant technique en apportant la rigidité requise, sans faire appel à une technologie complexe d'injection hybride métal plastique.

## Revendications

1. Structure de face avant technique de véhicule automobile comprenant un châssis (1) monobloc en matière plastique de forme sensiblement rectangulaire comprenant des points de fixation (5, 6, 7) destinés à être fixés à une structure de caisse (10) dudit véhicule, ledit châssis (1) présentant une face avant (2), une face arrière (3) et une bordure supérieure (4), ainsi qu'un élément de renfort métallique (8) du châssis, la bordure supérieure (4) présentant un logement (41) s'étendant dans une direction longitudinale de la bordure supérieure (4), au sein duquel est insérée une traverse métallique (81) formant l'élément de renfort métallique, la traverse métallique (81) étant maintenue en position dans le logement (41) d'une part, par des premiers éléments de fixation (83) agencés à chaque extrémité de la traverse métallique et aptes à relier mécaniquement entre eux la traverse métallique, le châssis et la structure de caisse lorsque le châssis est rapporté sur la structure de caisse et, d'autre part, par des seconds éléments de fixations (82) agencés le long d'une portion de la traverse métallique s'étendant entre chacune de ses extrémités et aptes à relier mécaniquement la traverse métallique au châssis,**caractérisée en ce que** le logement (41) présente à chacune de ses extrémités un orifice de fixation (43) pour le passage des premiers éléments de fixation (83) s'étendant selon un axe sensiblement parallèle au plan des faces avant et arrière, les orifices de fixation (43) agencés aux extrémités du logement (41) constituant des points de fixation verticale (7) du châssis sur la structure de caisse (10), le châssis étant apte à être pris en sandwich entre la traverse métallique (81) et la structure de caisse (10) aux dits points de fixation verticale (7) sous l'action des premiers éléments de fixation (83).

2. Structure selon la revendication 1, **caractérisée en ce que** le logement comprend, entre ses extrémités, une pluralité d'orifices de fixation (42) pour le passage des seconds éléments de fixation (82) s'étendant selon un axe sensiblement perpendiculaire au plan des faces avant et arrière.

3. Structure selon l'une quelconque des revendications précédentes, **caractérisée en ce que** les premiers éléments de fixation (83) comprennent une vis pour chaque extrémité de la traverse métallique.

4. Structure selon l'une quelconque des revendications précédentes, **caractérisée en ce que** les seconds éléments de fixation (82) comprennent quatre vis réparties sur la longueur de la traverse métallique (81) entre ses extrémités.

5. Structure selon l'une quelconque des revendications précédentes, **caractérisée en ce que** le logement est réalisé d'une pièce avec la bordure supérieure.

6. Structure selon l'une quelconque des revendications précédentes, **caractérisée en ce que** la traverse métallique (81) est constituée de deux tôles en acier superposées et soudées entre elle, conformées pour présenter une forme complémentaire à celle du logement 41 à l'intérieur duquel la traverse métallique est insérée.

7. Véhicule comprenant une structure de face avant technique selon l'une quelconque des revendications 1 à 6.

## Patentansprüche

1. Aufbau eines Frontendmoduls eines Kraftfahrzeugs, das ein einstückiges Fahrgestell (1) aus Kunststoff von im Wesentlichen rechtwinkliger Form enthält, das Befestigungspunkte (5, 6, 7) enthält, die dazu bestimmt sind, an einem Karosserieaufbau (10) des Fahrzeugs befestigt zu werden, wobei das Fahrgestell (1) eine Vorderseite (2), eine Rückseite (3) und eine obere Umrandung (4) sowie ein metallisches Verstärkungselement (8) des Fahrgestells aufweist, wobei die obere Umrandung (4) eine Aufnahme (41) aufweist, die sich in einer Längsrichtung der oberen Umrandung (4) erstreckt, in die ein metallischer Querträger (81) eingeführt wird, der das metallische Verstärkungselement bildet, wobei der metallische Querträger (81) in der Aufnahme (41) einerseits durch erste Befestigungselemente (83), die an jedem Ende des metallischen Querträgers eingerichtet sind und den metallischen Querträger, das Fahrgestell und den Karosserieaufbau mechanisch miteinander verbinden können, wenn das Fahrgestell auf den Karosserieaufbau aufgesetzt ist, und andererseits durch zweite Befestigungselemente (82) in Stellung gehalten wird, die entlang eines Abschnitts des metallischen Querträgers eingerichtet sind, der sich zwischen jedem seiner Enden erstreckt, und den metallischen Querträger mechanisch mit dem Fahrgestell verbinden können, **dadurch gekennzeichnet, dass** die Aufnahme (41) an jedem ihrer Enden eine Befestigungsöffnung (43) für den Durchgang der ersten Befestigungselemente (83) aufweist, die sich gemäß einer Achse im Wesentlichen parallel zur Ebene der Vorder- und Rückseite erstreckt, wobei die an den Enden der Aufnahme (41) eingerichteten Befestigungsöffnungen (43) senkrechte Befestigungspunkte (7) des Fahrgestells auf dem Karosserieaufbau (10) bilden, wobei das Fahrgestell unter der Wirkung der ersten Befestigungselemente (83) an den senkrechten Befestigungspunkten (7) zwischen dem metallischen Querträger (81) und dem Karosserieaufbau (10) sandwichartig eingeklemmt werden kann.

2. Aufbau nach Anspruch 1, **dadurch gekennzeichnet, dass** die Aufnahme zwischen ihren Enden eine Vielzahl von Befestigungsöffnungen (42) für den Durchgang der zweiten Befestigungselemente (82) enthält, die sich gemäß einer Achse im Wesentlichen lotrecht zur Ebene der Vorder- und Rückseite erstrecken.

3. Aufbau nach einem der vorhergehenden Ansprüche, **dadurch gekennzeichnet, dass** die ersten Befestigungselemente (83) eine Schraube für jedes Ende des metallischen Querträgers enthalten.

4. Aufbau nach einem der vorhergehenden Ansprüche, **dadurch gekennzeichnet, dass** die zweiten Befestigungselemente (82) vier Schrauben enthalten, die über die Länge des metallischen Querträgers (81) zwischen seinen Enden verteilt sind.

5. Aufbau nach einem der vorhergehenden Ansprüche, **dadurch gekennzeichnet, dass** die Aufnahme aus einem Stück mit der oberen Umrandung hergestellt wird.

6. Aufbau nach einem der vorhergehenden Ansprüche, **dadurch gekennzeichnet, dass** der metallische Querträger (81) aus zwei Stahlblechen besteht, die übereinander angeordnet und miteinander verschweißt sind, ausgebildet, um eine komplementäre Form zu derjenigen der Aufnahme (41) aufzuweisen, in deren Inneres der metallische Querträger eingeführt wird.

7. Fahrzeug, das einen Frontendmodulaufbau nach einem der Ansprüche 1 bis 6 enthält.

## Claims

1. Technical front face structure of a motor vehicle, comprising a single-component frame (1) made of a plastic material of substantially rectangular shape comprising fastening points (5, 6, 7) designed to be fastened to a bodywork structure (10) of said vehicle, said frame (1) having a front face (2), a rear face (3) and an upper edge (4) as well as a metal reinforcing element (8) of the frame, the upper edge (4) having a housing (41) extending in a longitudinal direction of the upper edge (4) inside which a metal cross-member (81) forming the metal reinforcing element is inserted, the metal cross-member (81) being held in position in the housing (41), on the one hand, by first fastening elements (83) arranged on each end of the metal cross-member and capable of mechanically interconnecting the metal cross-member, the frame and the bodywork structure when the frame is attached to the bodywork structure and, on the other hand, by second fastening elements (82) arranged along a portion of the metal cross-member extending between each of its ends and capable of mechanically connecting the metal cross-member to the frame, **characterized in that** the housing (41) has at each of its ends a fastening orifice (43) for the passage of the first fastening elements (83) extending along an axis substantially parallel to the plane of the front and rear faces, the fastening orifices (43) arranged at the ends of the housing (41) constituting vertical fastening points (7) of the frame on the bodywork structure (10), the frame being capable of being sandwiched between the metal cross-member (81) and the bodywork structure (10) at said vertical fastening points (7) by the action of the first fastening elements (83).

2. Structure according to Claim 1, **characterized in that** the housing comprises, between its ends, a plurality of fastening orifices (42) for the passage of the second fastening elements (82) extending along an axis substantially perpendicular to the plane of the front and rear faces.

3. Structure according to either of the preceding claims, **characterized in that** the first fastening elements (83) comprise a screw for each end of the metal cross-member.

4. Structure according to any one of the preceding claims, **characterized in that** the second fastening elements (82) comprise four screws distributed over the length of the metal cross-member (81) between the ends thereof.

5. Structure according to any one of the preceding claims, **characterized in that** the housing is produced in one piece with the upper edge.

6. Structure according to any one of the preceding claims, **characterized in that** the metal cross-member (81) consists of two steel sheets superposed and welded together, and configured so as to have a shape which is complementary to that of the housing (41), the metal cross-member being inserted therein.

7. Vehicle comprising a technical front face structure, according to any one of Claims 1 to 6.
